(19) Europäisches Patentamt
European Patent Office
Office européen des brevets

(11) **EP 4 685 177 A1**

(12) **EUROPEAN PATENT APPLICATION**

(43) Date of publication:
**28.01.2026 Bulletin 2026/05**

(21) Application number: **24190354.1**

(22) Date of filing: **23.07.2024**

(51) International Patent Classification (IPC):
**C08J 11/08** (2006.01)   **B29B 17/02** (2006.01)
**C09D 9/00** (2006.01)

(52) Cooperative Patent Classification (CPC):
**C08J 11/08;** B29B 17/02; B29B 2017/0244;
C08J 2323/06; C08J 2323/12; C08J 2367/02;
C09D 9/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH
1020 Vienna (AT)**

(72) Inventors:
• **DENIFL, Peter
4021 Linz (AT)**

• **KRUTA, Konstanze
4021 Linz (AT)**
• **ALBUNIA, Alexandra Romina
4021 Linz (AT)**
• **KAYNAK, Baris
4021 Linz (AT)**
• **DUSCHER, Bernadette
4021 Linz (AT)**

(74) Representative: **Kador & Partner Part mbB
Corneliusstraße 15
80469 München (DE)**

(54) **PROCESS FOR PURIFYING RECYCLING MATERIAL**

(57)    The present invention relates to a process for purifying polymer recycling material, wherein adsorbent material is used during the washing step for preventing recoloration of the polymer recycling material due to ink-bleeding in the washing step.

Fig. 1

## Description

The present invention relates to a process for purifying polymer recycling material, wherein adsorbent material is used during the washing step for preventing recoloration of the polymer recycling material due to ink-bleeding in the washing solution.

## Background

During the last decades, concern about plastics and the environmental sustainability of their use in current quantities has grown. Polymers are increasingly consumed in large amounts in a wide range of applications, including packaging for food and other goods, fibers, automotive components, and a great variety of manufactured articles. This has led to new legislation on disposal, collection and recycling of polymers. There have additionally been efforts in a number of countries to increase the percentage of plastic materials being recycled instead of being sent to landfill.

Polymer articles are often colored, and flexible polymer articles are generally heavily printed, often metallized, small in size, and often in contact with biological contaminations. These attributes result in a high contamination level, dark color, odor and emissions of waste containing these articles, which challenge mechanical recycling.

In a mechanical recycling process, one or more washing steps are used to remove a wide range of impurities mainly from the surface of polymer articles. Such impurities include, for example, particulate contaminants like soil, food residues and grease but also organic compounds adsorbed to the surface of the polymer. Especially in case of flexible polymer articles, such as films, very often an ink layer can be found on their surfaces. Removal of contaminants and in particular the ink layer of flexible polymer articles generates problems in mechanical recycling, why most of the recycling processes focus on recycling of rigid polymer articles. In case flexible material is contained as contaminant in the rigid polymer article streams of a mechanical recycling process, this material is usually sorted out from the rigid polymer article streams and discarded. For example, international applications WO 2023/118421 A1 and WO 2023/180222 A1 describe processes, wherein a light fraction typically containing labels and other non-flexible materials is separated from the recycling stream and not subjected to the further steps of the recycling process.

However, due to the large consumption of flexible polymer articles, particularly flexible polyolefin articles, recycling thereof becomes an important topic. Therefore, new processes must be established for the treatment of polymer recycling material comprising flexible polymer recycling articles to enable its reuse as recycled polymer material.

In particular, the removal of inks from the polymer surface is essential for obtaining high quality recycled material with a light, or preferably even with a white or natural, color. By intensive washing, efficiently high deinking degree, in the best-case complete removal of the ink, can be reached. However, the ink removed from the polymer surface often causes recoloration because of dissolution or dispersion of ink pigments/dyes in the washing medium (so-called "ink-bleeding") followed by redeposition of this dissolved or dispersed colorant on the polymer surface.

Compared to the removal of ink, removal of this redeposited ink pigments/dyes is even more difficult and cannot typically be achieved by applying an additional rinsing or even a further washing step. This is because ink usually contains other components which may not be present in the dissolved or dispersed ink pigments/dyes, and thus the adhesion properties of the colorants may be changed. In addition, the harsh washing conditions required for (even partial) removal of this recoloration during or after the actual deinking step (i.e., high temperature, high pH and long washing time) further favor ink-bleeding and result consequently in potentially even stronger recoloration.

Accordingly, there is a need for processes for the treatment of polymer recycling material comprising flexible polymer recycling articles that are usually provided with surface ink, wherein the problem connected with these ink contents is addressed, to enable the reuse of flexible polymer recycling material.

It is important for such processes that they are cost-efficient and can be integrated in established processes of polymer recycling.

## Summary of the Invention

The present invention is based on the observation that ink removed from polymer recycling articles during washing and contained in the washing solution can efficiently be bound by an adsorbent material in order to prevent recoloration of the polymer recycling articles and coloration of other polymer material contained in the washing solution.

Thus, the present invention is directed to a process for purifying polymer recycling material, the process comprising the steps of:

1) providing a polymer recycling material stream (1) that contains at least 10 wt.-% of flexible polymer recycling articles, based on the total weight of the polymer recycling material stream (1);
2) washing the polymer recycling material stream (1) in a washing solution in the presence of an adsorbent material at a temperature in the range of from 20 to 95 °C to obtain a washed polymer recycling material stream (2);

3) removing the washing solution from the washed polymer recycling material stream (2) to obtain a washed polymer recycling material stream (3);

4) removing the adsorbent material from the washed polymer recycling material stream (3) to obtain a washed polymer recycling material stream (4),

wherein steps 3) and 4) can be carried out concurrently;

5) optionally drying the washed polymer recycling material stream (4) to obtain a dried polymer recycling material stream (5);

and thus obtaining a purified polymer recycling material.

The process according to the present invention enables an efficient washing and deinking of polymer recycling material, wherein recoloration of the polymer recycling material with the ink pigments/dyes is highly reduced or even avoided.

The process according to the present invention can be easily integrated in established polymer (particularly polyolefin) recycling processes, and when using a common adsorbent material, the costs required for the washing step can be relatively low.

Further, the present invention is directed to a purified polymer recycling material obtainable by the process according to the present invention as well as to recycled polymer products prepared from the purified polymer recycling material.

The present invention is also directed to the use of an adsorbent material in the washing of a polymer recycling material for preventing recoloration of the polymer recycling material with ink removed from the surface of the polymer recycling material.

**Description of the Invention**

*Process*

The present invention is directed to a process for purifying polymer recycling material.

*Polymer recycling material*

According to the present invention, the wording *"polymer recycling material"* denotes a polymer material that has completed at least a first use cycle (or life cycle), i.e., it has already served its first purpose. Usually, polymer recycling material originates from waste, such as post consumer waste and industrial waste, i.e., manufacturing scrap, which does normally not reach a consumer. Preferably, polymer recycling material originates from post consumer waste, such as waste that may be obtained from conventional collecting systems, e.g., those implemented in the European Union. However, depending on the polymer, the polymer recycling material may originate from other sources where the polymer is collected for recycling.

Generally, the polymer of the polymer recycling material may be any polymer or a mixture of one or more of polymers. It is preferred that the polymer or polymer mixture is suitable for recycling and preparation of recycled polymer products.

Preferably, the polymer comprises at least a polymer selected from polyolefin, such as polypropylene and polyethylene, polyvinyl chloride, polyethylene terephthalate, silicone elastomer and any combination thereof. Preferably, the polymer comprises at least a polymer selected from polyolefin, polyethylene terephthalate and any combination thereof. Most preferably, the polymer comprises polyolefin. Depending on the collection system from which the polymer recycling material is obtained, the polymer recycling material may comprise other non-polymer components as described below for the polyolefin recycling material, usually in a content of from 0 to 20 wt.-%, based on the total weight of the polymer recycling material.

In some particular embodiments, the present invention is directed to a process for purifying polyolefin recycling material, the process comprising the steps of:

1) providing a polyolefin recycling material stream (1) that contains at least 10 wt.-% of flexible polyolefin recycling articles, based on the total weight of the polyolefin recycling material stream (1);

2) washing the polyolefin recycling material stream (1) in a washing solution in the presence of an adsorbent material at a temperature in the range of from 20 to 95 °C to obtain a washed polyolefin recycling material stream (2);

3) removing the washing solution from the washed polyolefin recycling material stream (2) to obtain a washed polyolefin recycling material stream (3);

4) removing the adsorbent material from the washed polyolefin recycling material stream (3) to obtain a washed polyolefin recycling material stream (4),

wherein steps 3) and 4) can be carried out concurrently;
5) optionally drying the washed polyolefin recycling material stream (4) to obtain a dried polyolefin recycling material stream (5);

and thus obtaining a purified polyolefin recycling material.

The preferred polyolefin of this embodiment is polypropylene.

According to the present invention, the wording *"polyolefin recycling material"* denotes a polyolefin material that has completed at least a first use cycle (or life cycle), i.e., has already served its first purpose. Usually, polyolefin recycling material originates from waste, such as post consumer waste and industrial waste. Preferably, polyolefin recycling material originates from post consumer waste.

Such post-consumer waste material (and thus also polymer recycling material) may e.g., be characterized by a limonene content of at least 0.1 ppm (as determined using solid phase microextraction (HS-SPMEGC-MS) by standard addition), which is usually not present in virgin polymer material, i.e., a polymer material freshly prepared. Further, polyolefin recycling material often contains a mixture of different polyolefins and other, non-polyolefin polymers (e.g., polystyrene, polyethylene terephthalate, polyamide etc.), since it generally comprises a mixture of polyolefin and non-polyolefin articles. One single polyolefin article may be composed of only one single kind of polymer or already from different kinds of polymers. In addition to the different polymers, other components may be present in the polyolefin recycling material also originating from post-consumer waste, such as wood, paper, limonene, aldehydes, ketones, fatty acids, metals, and/or long-term decomposition products of stabilizers. These components are usually not contained in virgin polymer material.

As used herein, the wording *"polyolefin"* denotes a polymer comprising at least 80 wt.-%, preferably at least 90 wt.-%, based on the total weight of the polyolefin polymer, of units derived from ethylene and/or alpha-olefin units having from 3 to 12 carbon atoms, preferably, ethylene and/or propylene units. A polyolefin may comprise up to 100 wt.-% of these units. Accordingly, non-polyolefin polymers and other components (as described above for the post-consumer waste) may be present in the polyolefin in a content of from 0 to 20 wt.-%.

In some embodiments, the polyolefin recycling material is polypropylene recycling material and/or polyethylene recycling material, i.e., the polyolefin as described above is polypropylene and/or polyethylene. As used herein, *"polypropylene"* denotes a propylene homopolymer and propylene copolymer and combinations (e.g., blends) thereof. Analogously, as used herein, *"polyethylene"* denotes an ethylene homopolymer and ethylene copolymer and combinations (e.g., blends) thereof. Propylene and ethylene homopolymers generally comprise at least 98 wt.-%, based on the total weight of the homopolymer, of units derived from the respective monomer. Propylene and ethylene copolymers generally refer to polymers comprising more than 50 wt.-%, based on the total weight of the copolymer, of units derived from the respective monomer and further units derived from ethylene and/or alpha-olefin units having from 3 to 12 carbon atoms, other than the main monomer unit.

Generally, the content of polymers (e.g., polyolefins) can be measured by spectroscopic methods, in particular, by Fourier-transform infrared (FTIR) spectroscopy.

As used herein, a *"recycled"* polymer material denotes a polymer material that has been prepared from a respective polymer recycling material by a recycling process and can be used in the general application for polymers. Usually, recycled polymer material is prepared from a recycling polymer material by purification and subsequent extrusion.

### Step 1) of the process

Step 1) of the process according to the present invention comprises providing a polymer recycling material stream (1) that contains at least 10 wt.-% of flexible polymer recycling articles, based on the total weight of the polymer recycling material stream (1).

Accordingly, the polymer recycling material as defined above is provided as a stream of polymer recycling material. The stream (1) contains at least 10 wt.-% of flexible polymer recycling articles, i.e., the polymer recycling material comprises at least 10 wt.-% of polymer recycling articles of flexible form.

Flexible polymer recycling articles are often printed and during washing the surface ink is released into the washing solution and causes (re-)coloration of the polymer material in the washing solution. It has been found that already 10 wt.-% of flexible articles may generate enough dissolved or dispersed (usually as colloids of sub-μm particles) ink in the washing solution to significantly (re-)color the polymer material. Thus, the process according to the present invention is advantageous for polymer recycling material streams comprising at least 10 wt.-% of flexible polymer recycling articles. Preferable, the polymer recycling material streams comprise at least 20 wt.-%, more preferably at least 30 wt.-%, even more preferably at least 50 wt.-% and most preferably at least 70 wt.-%, of flexible polymer recycling articles. High contents of flexible polymer recycling articles allow for efficient recycling processes to obtain high amounts of recycled polymer products of these articles.

*Flexible polymer recycling articles*

As used herein, the wording *"articles"* as such denotes objects comprising full-size articles and fragments thereof. Generally, the articles may be recycling articles or may be freshly prepared articles.

As used herein, the wording *"recycling articles"* denotes objects that have completed at least a first use cycle (or life cycle), i.e., have already served their first purpose.

The wording *"flexible articles"* (such as *"flexible polymer recycling articles"*) is well known in the art of polymer technology and is contrasted to the wording *"rigid articles"*. For example, a distinction may be made based on the thickness of these articles, i.e., *"flexible articles"* are objects that are typically thinner than 120 $\mu$m. The thickness can be measured on a sample of flexible articles by a micrometer gauge.

Generally, the polymer of the flexible polymer recycling articles may be any polymer. Usually, the flexible polymer recycling articles comprise or consist of at least a polymer selected from polyolefin, such as polypropylene and polyethylene, polyvinyl chloride, polyethylene terephthalate, silicone elastomers and any combination thereof. Preferably, the flexible polymer recycling articles comprise or consist of at least a polymer selected from polyolefin, polyethylene terephthalate and any combination thereof. Most preferably, the flexible polymer recycling articles comprise or consist of polyolefin, i.e., the flexible polymer recycling articles are flexible polyolefin recycling articles. According to the general definition above, the flexible polyolefin recycling articles may comprise between 0 and 20 wt.-% of non-polyolefin components.

Usually, flexible polymer articles are objects made from thin continuous plastic materials, i.e., plastic films, fibers, and all plastic fabrics (e.g., woven and melt-blown fibers). Flexible polymer recycling articles are such flexible polymer articles, which have already completed at least a first use cycle, as described above.

In some specific embodiments, the flexible polymer recycling articles are polymer films, such as labels, pouches, bags or other flexible packaging materials, or fragments thereof, preferably being polyolefin, such as polypropylene and/or polyethylene, articles. Often these articles comprise or are made of polypropylene, medium density polyethylene, low density polyethylene and/or linear low density polyethylene.

Generally, the flexible polymer recycling articles may be present in any article forms and sizes.

For a most efficient purification, the flexible polymer recycling articles are preferably provided as flakes. Preferably, the flexible polymer recycling articles are provided as flakes having sizes in the range of from 3.5 to 50.0 mm, more preferably from 5.0 to 40.0 mm and most preferably from 10.0 to 30.0 mm, for the largest dimension of a flake.

Preferably, the surface areas of the flakes of the flexible polymer recycling articles are in the range of from 50 to 2500 mm$^2$, more preferably from 100 to 1600 mm$^2$ and most preferably from 150 to 900 mm$^2$. In the context of the present invention, the flake surface area is defined as the surface area of one of the faces of a flake. This surface area is approximately half of the total surface area of the flake, which has two such faces in addition to a very small amount of surface area coming from the edges of the flake. Accordingly, the total surface area of the flake can range to more than 5000 mm$^2$.

Flakes in the respective sizes can generally be obtained by defining the flake sizes for a size-reducing machine, e.g., a shredder, that will automatically provide the defined flake sizes. If required, the flake sizes may be confirmed by a sieving analysis as known in the art. An optional size reduction, preferably flake formation, of the polymer recycling material stream (1) and thus of the flexible polymer recycling articles may take place before or after step 1) of the process.

The remaining components of the stream may be non-flexible (e.g., rigid) polymer articles of the same kind of polymer as the flexible polymer recycling articles and/or of different polymers. The components may also be of non-polymer nature (e.g., wood, paper, etc.) that may be generally present in recycling waste.

Generally, the polymer recycling material stream (1) may be obtained from waste-collecting systems in a non-presorted state or an already presorted state (e.g., enriched in one polymer type or article form).

In some embodiments, the polymer recycling material stream (1) comprises flexible polymer recycling articles in the form of labels from PET bottle collection systems. Such labels are usually made of polyolefin (particularly polypropylene). Thus, the polymer recycling material stream (1) comprises polyolefin recycling articles. The polymer recycling material stream (1) may further comprise rigid articles, preferably polyolefin rigid articles, which may originate from collection of the bottle caps (often being polyolefin such as HDPE). Such streams may contain low amounts of from 10 to 50 wt.-% of flexible polymer recycling articles, although higher amounts are also possible.

### Step 2) of the process

Step 2) of the process according to the present invention comprises washing the polymer recycling material stream (1) in a washing solution in the presence of an adsorbent material at a temperature in the range of from 20 to 95 °C to obtain a washed polymer recycling material stream (2).

For the present invention, it is important that the adsorbent material is present from the beginning of the washing step 2), ideally during the entire washing step 2), and in any event during the time when the polymer recycling material stream (1) is in contact with the washing solution-containing ink residues (dissolved or non-dissolved). If the adsorbent material is added later, i.e., after ink has already dissolved or has been dispersed in the washing solution, then recoloration may possibly not be avoided. Addition of adsorbent material will usually not allow to remove this recoloration anymore. Likewise, if the adsorbent material is removed before separation of the washed polymer recycling material stream (2) from the washing solution containing ink, ink residues may still dissolve and cause recoloration of the polymer.

It is thus preferred that the adsorbent material is already present in the wash reactor before addition of the polymer recycling material stream (1), or it is added together with the polymer recycling material stream (1), and that it is removed together with the washing solution or after removing the washing solution from the washed polymer recycling material stream.

*Washing solution*

As used herein, the wording *"washing solution"* generally denotes a solution being suitable for washing the flexible polymer recycling articles of the polymer recycling material stream (1).

The washing solution may comprise water, one or more organic solvent(s) or a mixture of water and one or more organic solvent(s).

In some preferred embodiments, the washing solution comprises water. Thus, the washing solution is an aqueous washing solution.

For an effective removal of contaminants and ink layers from flexible polymer recycling articles, high pH conditions and the use of wash additives (detergents) have been proven particularly suitable.

Preferably, the aqueous washing solution is an alkaline aqueous washing solution and has a pH in the range of from 8.0 to 14.0, more preferably from 10.0 to 14.0 and even more preferably from 12.0 to 14.0.

Preferably, the alkaline aqueous washing solution is an aqueous solution of a base selected from the group consisting of calcium hydroxide, potassium hydroxide, magnesium hydroxide, lithium hydroxide, sodium bicarbonate, sodium hydroxide and mixtures thereof. Most preferably, the aqueous washing solution is an aqueous solution of sodium hydroxide.

Preferably, the amount of the base in the alkaline aqueous washing solution is in the range of from 0.1 to 10.0 wt.-%, more preferably from 0.2 to 7.0 wt.-% and even more preferably from 0.5 to 5.0 wt.-% and most preferably from 1.0 to 3.0 wt.-%, based on the total weight of the alkaline aqueous washing solution.

The aqueous washing solution (preferably, alkaline aqueous washing solution) may also contain compounds which facilitate purification, such as detergents. Preferably, the aqueous washing solution contains at least one detergent in an amount in the range of from 0.1 to 3.0 wt.-% and more preferably from 0.1 to 1.0 wt.-%, based on the total weight of the aqueous washing solution.

The detergent(s) may be commercially available detergent mixtures or may be composed in any way known to the person skilled in the art. Suitable detergents include TUBIWASH SKP, TUBIWASH GFN, TUBIWASH EYE and TUBIWASH TOP, commercially available from CHT, KRONES colclean AD 1004, KRONES colclean AD 1002 and KRONES colclean AD 1008 from KIC KRONES, and P3-stabilon WT, P3 stabilon AL from ECOLAB Ltd.

In some embodiments, the washing solution is a mixture of water and one or more organic solvent(s). It is preferred that the mixture is an emulsion comprising one or more organic solvent(s) which are not miscible with water (i.e., to not form one homogeneous phase). In these embodiments, the aqueous washing solution may also comprise a base and/or a detergent as described above. Such emulsions are particularly suitable for the removal of both polar and non-polar organic compounds present in the polymer recycling material stream.

Generally, the emulsion may comprise

i) an aqueous phase, preferably having a pH in the range of from 7.0 to 14.0; and
ii) an organic phase comprising at least 90 % vol./vol. of one or more organic solvent(s) having logP values in the range of from 1.0 to 10.0.

Preferably, the emulsion comprises

i) an aqueous phase having a pH in the range of from 7.0 to 14.0; and
ii) an organic phase comprising at least 90 % vol./vol. of one or more fully saturated organic solvent(s) having logP values in the range of from 1.0 to 10.0.

The term *"fully saturated"* means that the compound (typically organic compound) does not have any double or triple bonds, i.e., all bonds present in the molecule are single (sigma) bonds. Fully saturated compounds may be linear, branched or cyclic. Fully saturated compounds are typically less reactive than unsaturated compounds due to the presence of fewer reactive double or triple bonds in the compound. Typical fully saturated organic solvents are linear, branched and cyclic alkanes and ethers, thioethers and amines (e.g., tertiary amines).

Emulsions comprising an aqueous and an organic phase are classified as either oil-in-water or water-in-oil emulsions, depending on which component forms the dispersed phase and which forms the continuous phase, which can usually be predicted from the relative amounts (i.e. ratio) of the phases. As used herein, the terms *"oil"* and *"water"* are equivalent to *"organic phase"* and *"aqueous phase",* respectively. The emulsion may further comprise further phases, being immiscible with the aqueous phase and the organic phase.

The relative contents of the organic and aqueous phases are not particularly limited in the present invention. It is preferred that the ratio of the organic phase to the aqueous phase is in the range of from 1:99 to 99:1, more preferably from 5:95 to 95:5.

The organic phase comprising at least 90 % vol./vol. of one or more organic solvent(s) having logP values in the range of from 1.0 to 10.0, preferably comprises at least 95 % vol./vol., more preferably at least 98 % vol./vol. and most preferably consists of, the one or more organic solvent(s).

The organic solvent(s), preferably fully saturated organic solvent(s), has logP values in the range of from 1.0 to 10.0, preferably has logP values in the range of from 2.0 to 8.0, more preferably from 3.0 to 6.0.

The term logP refers to the partition function between two solvents, which, unless specified otherwise, are taken to be octanol and water. The logP of a given compound is calculated according to the following equation:

$$logP_{(octanol/water)} = log\left(\frac{[compound]^{octanol}}{[compound]^{water}}\right)$$

wherein the terms [compound]$^{octanol}$ and [compound]$^{water}$ denote the concentration of the given compound in the octanol or water phase, respectively, in a biphasic octanol/water system. It is generally known how to measure the concentrations for a given compound. Moreover, the values of many compounds have been tabulated and can be found i.a., in James Sangster, Octanol-Water Partition Coefficients of simple organic compounds. J. Phys. Chem. Ref. Data 18, No 3, 1111-1226 (1989).

The organic solvents, preferably fully saturated organic solvents, are preferably selected from the group of linear and branched alkanes and ethers, thioethers and amines (i.e., containing only carbon, hydrogen and optionally oxygen, sulfur and nitrogen), more preferably from the group of linear and branched alkanes (i.e., containing only carbon and hydrogen).

In some embodiments, the washing solution comprises one or more organic solvent(s) and no or only traces of water. Preferred organic solvents are selected from organic solvents having logP values in the range of from 1.0 to 10.0, as described above. Similarly preferred organic solvents are selected from organic solvents having logP values in the range of from -3.0 to 1.0, and thus being more hydrophilic, such as esters, thioesters and amides.

Generally, the ratio (wt./wt.) of the flexible polymer recycling articles to the washing solution may be from 0.001:1 to 10:1, preferably from 0.002:1 to 5:1, such as 0.005:1 to 1:1. The skilled person can easily determine the most suitable ratio, e.g., based on the ink content in the flexible polymer recycling articles.

*Adsorbent material*

The washing step is conducted in the presence of an adsorbent material. Adsorbent materials are generally known in the art and usually comprise inorganic and organic materials, on which surface adhesion of other compounds (e.g., pigments/dyes and other impurities) can easily occur.

In principle, any adsorbent material for dyes and pigments of inks may be employed according to the present invention. Generally, the adsorbent material is an adsorbent or an adsorbent mixture comprising at least one inorganic or organic adsorbent. Preferably, the adsorbent material is selected from the group consisting of zeolites, activated carbon, charcoal, silica, alumina, clay, cellulose-based material, cotton-based material, polyglucosamines, such as chitosan and chitin, metal oxides and metal hydroxides, and any combination thereof.

In some embodiments, the adsorbent material is selected from the group consisting of zeolites, activated carbon, cellulose-based material, and any combination thereof.

Cellulose-based material used as adsorbent material may be in the form of woven or non-woven fabrics. One example of a non-woven cellulose-based material (specifically, a cellulose microfiber sheet) is the color collection fabrics/clothes commercially available as *"Dr.*

*Beckmann Farb & Schmutz Fänger All in 1".*

Generally, the adsorbent material may be used in any geometrical form and in any size usually used for adsorbent materials, e.g., in the form of powder, pellets and fabrics.

Generally, a huge variety of different inks is used for printing on polymers. In addition to different dyes and pigments (which already encompass a huge variety of organic and inorganic compounds), the inks may contain further additives, e.g., additives facilitating adhesion to the polymer. A preferred adsorbent material efficiently binds all kinds of inks, e.g., such as adsorbents selected from the above-described adsorbent materials.

However, if it is known that a specific ink was used (which can be e.g., assessed according to the color of the ink), it may be possible to select an adsorbent material known to be highly efficient for binding the components of this specific ink. For example, M. T. Yagub et al., Dye and its removal from aqueous solution by adsorption: A review. Advances in Colloid and Interface Science 209, 172-184 (2014), analyze and the describe the adsorption of different dyes by specific adsorbents.

The amount of the adsorbent material used in the washing step is selected in such a way that efficient adsorption of the dyes and pigments of inks removed from the polymer surfaces can take place. Accordingly, based on the amount of the inks to be removed, the amount of the adsorbent material can be adjusted. A clear washing solution with no pigments is an indicator that the amount of the adsorbent material is sufficient to bind the ink.

It has been empirically found that an amount of from 0.1 to 10.0 wt.-% of adsorbent material, based on the total weight of the washing solution, may be used for sufficient adsorption. Preferably, an amount of from 0.1 to 5.0 wt.-%, more preferably from 0.5 to 5.0 wt.-%, of adsorbent material is used.

*Washing*

Generally, the washing step 2) is conducted at a temperature in the range of from 20 to 95 °C, more preferably from 50 to 90 °C and even more preferably from 65 to 85 °C.

Generally, the washing time of the washing step may be adjusted based on the purification efficiency. Preferably, the washing time is in the range of from 5 to 120 min, more preferably from 10 to 80 min and even more preferably from 15 to 60 min.

It is further preferred that the washing step 2) is conducted under agitation conditions, e.g., through mechanical mixing, ultrasonic treatment, mechanical grinding and/or pump around loop. The agitation conditions help to expose the polymers to fresh washing solution, thus ensuring that the process is not hindered through the buildup of contaminants in the immediate vicinity of the polymer. The person skilled in the art would be aware that multiple individual methods as provided above could be combined to improve the agitation, for example a combination of mechanical mixing and ultrasonic treatment.

It is preferred that the washing step 2) is conducted in a container (e.g., a vessel or a reactor) under stirring conditions, such as at a stirring speed in the range of from 20 to 300 rpm, preferably from 30 to 200 rpm.

In a preferred embodiment, the washing step 2) is conducted at a temperature in the range of from 65 to 85 °C, for a washing time in the range of from 15 to 60 min and optionally a stirring speed in the range of from 100 to 200 rpm. Preferably, the washing solution in this embodiment is an aqueous washing solution comprising from 1.0 to 3.0 wt.-% of a base (preferably NaOH) and from 0.1 to 1.0 wt.-% of a detergent, based on the total weight of the aqueous washing solution.

The washing step 2) may be conducted in one step or may comprise several sub-steps of washing, as further detailed below. The washing step 2) may comprise a first washing sub-step, removal of the washing solution, a second washing sub-step, followed by removal of the washing solution and an optional rinsing step (e.g., with water) for more efficient removal of the contaminants and the washing solution.

It is noted that the last step of removing the washing solution corresponds to step 3) of the process according to the present invention.

In some embodiments, the washing step 2) is conducted as only one step of washing (e.g., with an aqueous washing solution), followed by removal of the washing solution, and an optional rinsing step. In these embodiments, the washing conditions are preferably as described above.

In some other embodiments, the washing step 2) is conducted in more sub-steps of washing, wherein at least two washing solutions (e.g., a first aqueous washing solution (W1) and a second aqueous washing solution (W2)) at the same or preferably at different washing conditions are used, followed by subsequent removal of the washing solution, and an optional rinsing step.

In one particular embodiment, the washing step 2) comprises the sub-steps of:

1a) washing with a first aqueous washing solution (W1), preferably without the input of thermal energy;

1b) removing at least part of the first aqueous washing solution (W1), preferably substantially all of the first aqueous washing solution (W1); and

1c) washing with a second aqueous washing solution (W2), wherein sufficient thermal energy is introduced to preferably provide a temperature in the range of from 65 to 95 °C during the washing.

In the embodiments conducted with more than one sub-step of washing, the first aqueous washing solution (W1) and the second aqueous washing solution (W2) are preferably as generally defined above for the aqueous washing solution.

The person skilled in the art would be aware that the washing steps may be either heated to achieve a high temperature wash or alternatively can be conducted at ambient conditions to achieve a low temperature wash. In some of the embodiments, the first washing step (e.g., step 1a) above) corresponds to such a low temperature wash.

The skilled person would also be aware that depending on the choice of the first aqueous washing solution (W1), the temperature during the first washing step (e.g., step 1a) above) may or may not truly match the ambient conditions, since the first aqueous washing solution (W1) may be hotter than ambient conditions due to being used, for example, in a previous high temperature wash. Even if the first aqueous washing solution (W1) has a temperature higher than ambient conditions, it would still be expected to be considerably lower that the temperature typically required for high temperature washing. What is preferred for the first washing step (e.g., step 1a) above) is that no further thermal energy is expended to increase the temperature of the first aqueous washing solution (W1) during the first washing step (e.g., step 1a) above).

It is preferred that the temperature of the first aqueous washing solution (W1) during the first washing step (e.g., step 1a) above) is less than 70 °C, more preferably less than 65 °C, most preferably less than 60 °C, such as less than 50 °C or especially preferred less than 40 °C.

The choice of the first aqueous washing solution (W1) is not particularly limited; however, it is preferred that the first aqueous washing solution (W1) has a pH in the range of from 8.0 to 14.0, more preferably from 10.0 to 14.0 and even more preferably from 12.0 to 14.0. These alkaline conditions are preferably adjusted as generally described above.

The first aqueous washing solution (W1) may comprise a detergent in an amount in the range of from 0.1 to 3.0 wt.-% and more preferably from 0.1 to 1.0 wt.-%, based on the total weight of the first aqueous washing solution (W1). The detergent(s) may be as defined above.

The first washing typically lasts at least 5 min, and preferably lasts from 5 to 120 min, more preferably from 5 to 60 min and even more preferably from 5 to 30 min.

Subsequently to the washing with the first aqueous washing solution (W1), at least part of the first aqueous washing solution (W1), preferably substantially all of the first aqueous washing solution (W1), is removed (such as in step 1b) above). Preferably the removal does not involve the targeted removal of foreign material by using, for example, a so-called float/sink separation, wherein all foreign material that does not float on the surface of the solution is removed with the solution. In this way, only the washing solution is removed, and the adsorbent material stays in contact with the polymer.

Following the removal of at least part of the first aqueous washing solution (W1), an optional rinsing with water to remove traces of the first aqueous washing solution (W1) may be carried out.

Subsequently, washing with a second aqueous washing solution (W2) (such as in step 1c) above) can be carried out, wherein sufficient thermal energy is introduced to provide a temperature in the range of from 65 to 95 °C during the washing.

As discussed above, the person skilled in the art would be aware that the washing steps may be either heated to achieve a high temperature wash or alternatively can be conducted at ambient conditions to achieve a low temperature wash. The second washing step is typically a high temperature wash, wherein thermal energy is introduced to preferably provide a temperature of 65 to 95 °C during the washing.

The temperature of the second washing step is in the range of from 65 to 95 °C, more preferably from 70 to 95 °C and even more preferably from 75 to 95 °C.

It is preferred that the second aqueous washing solution (W2) is an alkaline aqueous washing solution. Preferably, the second alkaline aqueous washing solution (W2) has a pH in the range of from 9.0 to 14.0, more preferably from 11.0 to 14.0 and even more preferably from 12.0 to 14.0. These alkaline conditions are preferably adjusted by the addition of a base as described above.

The second aqueous washing solution (W2) preferably comprises a detergent in an amount in the range of from 0.1 to 3.0 wt.-% and more preferably from 0.1 to 1.0 wt.-%, based on the total weight of the second aqueous washing solution (W2). The detergent(s) may be as defined above.

The second washing typically lasts at least 5 min, and preferably lasts from 5 to 120 min, more preferably from 10 to 80 min and even more preferably from 15 to 60 min.

Subsequently to the washing with the second aqueous washing solution (W2), the second aqueous washing solution (W2) is removed from the mixture (step 3)). The possible conditions for removal are described below. Preferably this removal step involves the targeted removal of foreign material through the use of, for example, a so-called float/sink separation, wherein all foreign material that does not float on the surface of the solution is removed with the solution. If the rigid polymer articles have a higher density than the flexible polymer recycling articles and water (e.g., if they are rigid PET articles), they are also removed with the solution. Alternatively or additionally, removal of foreign material may be conducted by the use of a hydrocyclone based on the difference in densities. With both methods, adsorbent material can be concurrently removed.

Without wishing to be bound by theory, it is believed that the inclusion of a float/sink separation or hydrocyclone step directly after the high temperature wash (such as step 1c) above), is extremely beneficial for removing as much foreign material as possible. Later steps in the process, such as drying, may result in foreign material - that has not been removed - readhering to the flexible polymer recycling articles. This can result in contamination of the final product.

Following the removal of the second aqueous washing solution (W2), optional rinsing step with water may follow to remove traces of the second aqueous washing solution (W2).

*Rigid polymer articles*

In the washing step 2) of the process according to the present invention, rigid polymer articles may be also employed in order to improve the washing effect. The wording *"rigid polymer articles"* is well known in the art of polymer technology. In contrast to flexible polymer articles, rigid polymer articles are characterized by a larger thickness (e.g., thicker than 120 $\mu$m) than the flexible polymer articles. Generally, rigid polymer articles are objects made from polymers that are rigid or semirigid in form. Usually, they originate from objects other than films, such as objects obtained from molded polymers. Examples are daily-life plastics in households and plastic automotive equipment, such as plastic devices, containers and bottles. Rigid polymer articles may be made from or can comprise different kinds of polymers such as polyolefins (e.g., polypropylene and/or polyethylene as described above), polyethylene terephthalate, polyvinyl chloride, polystyrene and others. Preferably, they are made of or comprise polyolefins, most preferably polypropylene and/or polyethylene.

The rigid polymer articles may be recycling or recycled polymer articles or virgin polymer articles, wherein *"recycling", "recycled"* and *"virgin"* material denote materials as described above.

The rigid polymer articles, particularly the virgin or recycled rigid polymer articles, may be in the form of pellets. Pellets can be obtained by extrusion of the polymer and pelletizing to small pellet particles, preferably with a length of up to 5 cm, more preferably up to 4 cm, such as up to 3 cm.

Alternatively, the rigid polymer articles, particularly the recycling rigid polymer articles, are present in the form of flakes, wherein the flakes may have sizes in the range of from 3.5 to 50.0 mm, more preferably from 5.0 to 40.0 mm and most preferably from 10.0 to 30.0 mm, for the largest size of a flake, and/or surface areas in the range of from 50 to 2500 mm$^2$, more preferably from 100 to 1600 mm$^2$ and most preferably from 150 to 900 mm$^2$.

A ratio of flexible polymer recycling articles to rigid polymer articles from 0.1:1 to 10:1 is very efficient for the washing of the flexible polymer recycling articles.

The rigid polymer articles, if present are usually separated from the flexible polymer recycling articles of the stream after the washing step. Preferably, the rigid polymer articles are separated after step 4) or the optional step 5). Such a separation step can be carried out by any separation technique known in the art. Preferably, the separation step is carried out by a dry-state separation technique. Suitable techniques include ballistic separators, pneumatic classifying, air separators, wind sifters and zig-zag cascade separators. Alternatively or additionally, the rigid polymer articles may be separated from the flexible polymer recycling articles already during step 3) and/or 4).

***Steps 3) and 4) of the process***

The process according to the present invention further comprises a step 3) of removing the washing solution from the washed polymer recycling material stream (2) to obtain a washed polymer recycling material stream (3); and a step 4) of removing the adsorbent material from the washed polymer recycling material stream (3) to obtain a washed polymer recycling material stream (4).

The removal steps 3) and 4) can either be carried out in this order (i.e., from 3) to 4)), or they can be carried out concurrently. It is important that the adsorbent material is not removed before the removal of the washing solution to minimize the risk of recoloration of the polymer with ink, as described above.

In some embodiments, the adsorbent material is removed together with the washing solution. Accordingly, the washing solution is separated from the washed polymer recycling material stream by concurrent removal of the adsorbent material.

In other embodiments, the adsorbent material is removed after the washing solution has been removed. In such embodiments, the adsorbent is subsequently separated from the washed polymer recycling material stream. Especially if the adsorbent material is in the form of relatively large objects such as pellets or fabrics, the separation thereof from the washed polymer recycling material stream is facilitated. In some embodiments, the adsorbent material is removed by a drying and wind-sifting step. In some embodiments, the adsorbent material is removed by a filtration/screening step.

The removal of the washing solution involves removing at least part of the washing solution, preferably substantially all of the washing solution. Generally, any method for removing liquids from solids may be used. The person skilled in the art would understand that small amounts of foreign material that is either suspended or dissolved in the washing solution would be removed with the washing solution (e.g., if it is not adsorbed by the adsorbent material). This step may involve the targeted removal of foreign material through the use of, for example, a so-called float/sink separation, wherein all foreign material that does not float on the surface of the solution (given that it would be expected that polyolefins having a density of less than 1.00 g/cm$^3$ would float) is removed with the solution. A float/sink separation (i.e., by use of a float/sink unit) may also be used for concurrent removal of the washing solution and the adsorbent material. Alternatively, concurrent removal of the washing solution and the adsorbent material can be carried out by a hydrocyclone. By these techniques, particulate ink residues (i.e., ink not dissolved in the washing solution) are also easily removed.

Following the removal of at least part of the washing solution, the mixture may optionally be rinsed, e.g., with water, to remove traces of the washing solution and ink residues if present (e.g., attached to the polymer). Rinsing generally takes place for a short time of about 1 to 5 min.

## *Step 5) of the process*

The process according to the present invention further comprises an optional step 5) of drying the washed polymer recycling material stream (4).

Step 5) may be conducted with any technique used in the art for drying of polymer articles. The drying of step 5) can be achieved through thermal drying or through a combination of mechanical and thermal drying. Suitable forms of mechanical drying include centrifugal drying and a dewatering press (filter or screw-press), each of which allows for the removal of liquids from solids.

## *Further optional steps of the process*

The process according to the present invention may comprise additional steps before step 1), after step 5) and/or in-between any of steps 1) to 5).

The process according to the present invention may comprise any of the further steps:

- sieving the polymer, preferably polyolefin, recycling material stream to create a sieved polymer, preferably polyolefin, recycling material stream having only articles with a longest dimension in the range of from 30 to 400 mm;
- sorting the polymer, preferably polyolefin, recycling material stream, e.g., by means of one or more optical sorters at least by polymer type;
- adding rigid polymer articles to the polymer, preferably polyolefin, recycling material stream;
- reducing the size of the polymer, preferably polyolefin, recycling material stream, e.g., to form a flaked polymer, preferably polyolefin, recycling material stream;
- adding rigid polymer articles to the size-reduced, e.g., flaked polymer, preferably polyolefin, recycling material stream;
- rinsing the polymer, preferably polyolefin, recycling material stream with the washing solution or water,
- conducting further recycling steps;
- melt-extruding the polymer, preferably polyolefin, recycling material stream, preferably wherein additives (Ad) are added in the melt state, to form an extruded recycled polymer, preferably polyolefin, product;
- pelletizing the recycled polymer, preferably polyolefin, product; and
- aerating the polymer, preferably polyolefin, recycling material stream or the recycled polymer, preferably polyolefin, product to remove volatile organic compounds.

### *Rinsing*

The process may comprise one or more rinsing steps with the washing solution and/or with water. For example, after step 3) of removing the washing solution and/or step 4) of removing the adsorbent material, a rinsing step may be performed in order to remove residues of the removed substances and optionally other contaminants. As described above, a rinsing step generally takes place for a short time of about 1 to 5 min.

### *Size reduction*

The process according to the present invention may further comprise a size-reduction step before or after step 1). It is particularly advantageous if the polymer recycling material stream (1) containing flexible polymer recycling articles is provided in the form of flakes, as described above.

The size-reduction step may be carried out by any method known to the person skilled in the art. Suitable methods involve milling or grinding. A preferred method involves shredding.

The shredding step may be a wet-shredding process or a dry-shredding process. Preferably, the shredding step is a wet-shredding process, wherein the polymer recycling material stream is first contacted with water or a solution, which is thereafter subjected to shredding. The solution may be an aqueous washing solution as defined above.

*Further sorting/separating and purification*

The process according to the present invention may further comprise sorting and separating the polymer recycling material stream and/or further purifying the polymer recycling material stream. For examples, such steps may be carried out before the washing step 2) and/or after step 4) or 5).

Sorting and separating steps may comprise sorting of the polymer recycling material stream according to polymer type and/or color to obtain a polymer, preferably polyolefin, recycling material stream with more defined characteristics.

Alternatively or additionally, sorting and separating steps may be carried out on the washed polymer recycling material stream (preferably after step 4) or 5)), for example to remove rigid polymer articles from the flexible polymer recycling articles.

A sieving step of the polymer recycling material stream may also be carried out in order to obtain articles with pre-determined sizes.

An additional purification step may be the removal of metal components from the polymer recycling material stream.

All these further steps have the advantage to prepare a more homogeneous polymer recycling material stream which may facilitate purification. For example, if performing sorting according to color, articles with a high content of similar ink compounds may be obtained. Accordingly, it may be possible to select an adsorbent material known to be highly efficient for binding compounds of this kind of ink.

*Extrusion and pelletizing*

The process according to the present invention may further comprise an extrusion step to recover a recycled polymer product.

An extrusion step is preferably conducted using an extruder, more preferably a single-screw extruder. In particular, it is preferred to use a conventional compounding or blending apparatus, e.g., a single-screw extruder, conical co-rotating twin-screw extruder or multiple extruders (either single screw, twin screw, or a combination thereof) arranged in series. After the extrusion step, the polymer recycling material stream is normally recovered as extruded polymer product. The extruded polymer product, particularly an extruded polyolefin product, may be in the form of pellets, wherein a pelletizing step at the end of the extrusion step is used.

Any additives (Ad) may be added during the extrusion step, e.g., selected from additives known in the art, preferably selected from the group consisting of antioxidants, stabilizers, fillers, colorants, nucleating agents, antistatic agents, and mixtures thereof. Such additives are generally commercially available and are described, for example, in *"Plastic Additives Handbook"*, pages 871 to 873, 5th edition, 2001 of Hans Zweifel.

In some particular embodiments, the process according to the present invention comprises the following steps, preferably in the indicated order:

a) providing a polymer, preferably polyolefin, recycling material stream (A) that contains at least 10 wt.-% of flexible polymer, preferably polyolefin, articles, based on the total weight of the polymer, preferably polyolefin, recycling material stream (A);

b) optionally sieving the polymer, preferably polyolefin, recycling material stream (A) to create a sieved polymer, preferably polyolefin, recycling material stream (B) having only articles with a longest dimension in the range of from 30 to 400 mm;

c) optionally sorting the polymer, preferably polyolefin, recycling material stream (A) or (B) by means of one or more optical sorters at least by polymer type, thereby generating a sorted polymer, preferably polyolefin, recycling material stream (C);

d) optionally adding rigid polymer articles to the polymer, preferably polyolefin, recycling material stream (A), (B) or (C) to form a polymer, preferably polyolefin, recycling material stream (D);

e) reducing the size of the polymer, preferably polyolefin, recycling material stream (A), (B), (C) or (D) to form a flaked polymer, preferably polyolefin, recycling material stream (E);

f) optionally adding rigid polymer articles to the flaked polymer, preferably polyolefin, recycling material stream (E) to form a polymer, preferably polyolefin, recycling material stream (F);

g) washing the polymer, preferably polyolefin, recycling material stream (E) or (F) in a solution in the presence of an adsorbent material at a temperature in the range of from 20 to 95 °C to obtain a washed polymer, preferably polyolefin, recycling material stream (G);

h) removing the washing solution from the washed polymer, preferably polyolefin, recycling material stream (G) to obtain a washed polymer, preferably polyolefin, recycling material stream (H);

i) removing the adsorbent material from the washed polymer, preferably polyolefin, recycling material stream (H) to obtain a washed polymer, preferably polyolefin, recycling material stream (I),

wherein steps h) and i) can be carried out concurrently;

j) optionally drying the washed polymer, preferably polyolefin, recycling material stream (I) to obtain a dried polymer, preferably polyolefin, recycling material stream (J);

k) optionally conducting further recycling steps to obtain a further processed polymer, preferably polyolefin, recycling material stream (K);

l) melt-extruding, preferably pelletizing, the polymer, preferably polyolefin, recycling material stream (I), (J) or (K), preferably wherein additives (Ad) are added in the melt state, to form an extruded, preferably pelletized, recycled polymer, preferably polyolefin, product (L); and

m) optionally aerating the recycled polymer, preferably polyolefin, product (L) to remove volatile organic compounds, thereby generating an aerated extruded, preferably pelletized, recycled polymer, preferably polyolefin, product (M),

wherein the order of steps l) and m) can be interchanged, such that the polymer, preferably polyolefin, recycling material stream (I), (J) or (K) is first aerated to form an aerated polymer, preferably polyolefin, recycling material stream (M1), that is subsequently extruded, preferably wherein additives (Ad) are added in the melt state, to form an extruded, preferably pelletized and aerated recycled polymer, preferably polyolefin, product (L1).

Step a) involves the provision of a polymer recycling material stream (A) that contains at least 10 wt.-% of flexible polymer articles, based on the total weight of the polymer recycling material stream (A). The polymer recycling material stream (A) may be as defined for the polymer recycling material stream (1) herein. Further, it may be a precursor of the polymer recycling material stream (1), from which the polymer recycling material stream (1) is prepared by mechanical recycling steps such as e.g., sorting of the precursor materials.

The form of the polymer recycling material stream (A) is not important; however, what is required is that the articles present in the polymer recycling material stream (A) are not stuck together during the subsequent steps. A common form of commercially obtainable recycling material streams is a bale. If the polymer recycling material stream (A) is provided in the form of a bale, it will be required to break apart the bale before polymer recycling material stream (A) undergoes the optional sieving of step b). Depending on which method has been used to pack the bale, it may also be necessary to remove any wires that were used to strap the bale (bale de-wiring) and/or empty the bale from a container, such as a plastic bag or wrapping (bag/bale opening).

Optional step b) involves sieving the polymer recycling material stream (A) to create a sieved polymer recycling material stream (B) having only articles with a longest dimension in the range of from 30 to 400 mm.

The person skilled in the art would be aware of multiple ways in which the sieving of step b) could be achieved and, as such, this sieving step is not particularly limited. That said, it is preferred that the sieving of step b) is achieved by using one sieve with a sieve diameter of 30 mm and another sieve with a sieve diameter of 400 mm to divide the polymer recycling material stream (A) into three material streams, an undersized stream of articles having a longest dimension of less than 30 mm, an oversized stream of articles having a longest dimension of greater than 400 mm and the sieved polymer recycling material stream (B). The undersized and oversized streams may either be discarded or redirected for use in other mechanical polymer recycling processes.

Optional step c) involves sorting the polymer recycling material stream (A) or (B) by means of one or more optical sorters at least by polymer type, thereby generating a sorted polymer recycling material stream (C).

In the broadest sense, any optical sorter can be used to achieve the sorting of step c). In the context of the present invention, the term *"optical sorter"* refers to a sorting unit that uses any form of EM-radiation (visible or non-visible) to differentiate the pieces of the sieved polymer recycling material stream (B).

In addition to the sorting by polymer type, the optional step c) can involve sorting by color or sorting by article type.

Suitable methods for sorting the recycling material stream according to color include camera systems (operating in the visible range of the EM-spectrum) and visible reflectance spectroscopy.

Suitable methods for sorting the recycling material stream according to polymer type include near-IR spectroscopic analysis, mid-IR spectroscopic analysis, high-speed laser spectroscopic analysis, Raman spectroscopic analysis, Fourier-transform infrared (FT-IR) spectroscopic analysis. Particularly preferred is near-IR spectroscopic analysis.

Suitable methods for sorting the recycling material stream according to article type include camera systems (operating in the visible range of the EM-spectrum).

In some embodiments, the sorting step c) sorts only according to polymer type, meaning that the sorted polymer recycling material stream (C) contains mainly polymer (preferably polyolefin, such as polypropylene and/or polyethylene). The sorting can be adjusted in that the sorted polymer recycling material stream (C) contains mainly one single polymer type (preferably polypropylene or polyethylene).

In some embodiments, the sorting step c) sorts according to polymer type and color, meaning that the sorted polymer recycling material stream (C) contains mainly one polymer kind (preferably polypropylene and/or polyethylene) and it is of particular color(s).

In some embodiments, a single sensor type (e.g., near-IR sensor or camera system operating in the visible range of the EM spectrum) can be used to distinguish more than one property (e.g., color and polymer type or color and article type). Furthermore, many near-IR sensor units comprise visible reflectance units or may be configured to measure both the near-IR and visible areas of the EM spectrum, meaning that a single sensor unit may use multiple detection methods. Multiple detection methods and/or multiple sensors can be employed to achieve the sorting of step c).

In some embodiments, the sorting step c) sorts additionally according to article type, e.g., for flexible versus rigid articles.

Although the process of the present invention is suitable for the purification of any polymer, the purification of polyethylene or polypropylene is particularly desirable.

The sorting of step c) can be achieved through simple sorting algorithms, wherein the optical sensor(s) are programmed to assess which pieces should be selected or rejected based on simple binary considerations. Alternatively, more complex AI-based systems can be used to achieve a more precise sorting, in particular when sorting according to article type.

Furthermore, in different countries or regions, different packaging may have different typical coloring, such that, for example, green pieces would be more likely to contain a certain non-desired polymer. The advantages of the color sorting of step c) can be different depending on which country or region the polymer recycling material stream has been sourced from.

Additionally, certain colored polymers contain specific pigments/dyes, which may individually lead to contamination of the recycled polymer product, such as if they contain metal pigments or are prone to decomposition during extrusion, thus forming malodorous compounds, or catalyze decomposition of the polymer during extrusion. Removal of colored polymers known to contain these pigments/dyes would avoid these issues, resulting in improved quality of the recycled products.

The presence of the sorting step c) in the recycling process furthermore means that the respective process enables the operator to obtain high quality recycled products, regardless of the quality of the feedstock material. It is well known that feedstock materials can greatly vary in quality, with regard to polymer content and foreign material contamination, which is largely dependent on the source of the feedstock material.

Optional step d) involves adding rigid polymer articles to the polymer recycling material stream (A), (B) or (C) to form a polymer recycling material stream (D).

Addition of rigid polymer articles at this stage of the process may facilitate the subsequent size reducing step e).

Step e) involves reducing the size of the polymer recycling material stream (A), (B), (C) or (D) to form a flaked polymer recycling material stream (E). This step may be as described above for the size reduction.

Optional step f) involves adding rigid polymer articles to the flaked polymer recycling material stream (E) to form a polymer recycling material stream (F).

The rigid polymer articles added in this step may be rigid polymer articles after size reduction, such as rigid polymer flakes of recycling polymers. Alternatively or additionally, they may be pellets, such as virgin polymer pellets or recycled polymer pellets. Usually, they have already the preferred pellets or flake sizes as defined above.

Step g) involves washing the polymer recycling material stream (E) or (F) in a washing solution in the presence of an adsorbent material at a temperature in the range of from 20 to 95 °C to obtain a washed polymer recycling material stream (G).

In some embodiment, the washing step g) comprises:

g1) optionally contacting the polymer recycling material stream (E) or (F) with a first aqueous washing solution (W1) thereby generating a first suspended mixture (G1a) and washing without the input of thermal energy; then removing at least part of the first aqueous washing solution (W1), preferably substantially all of the first aqueous washing solution (W1), from the first suspended mixture (G1a) to obtain a first washed mixture (G1b);

g2) contacting the polymer recycling material stream (E), (F) or (G1b) with a second aqueous washing solution (W2) thereby generating a second suspended mixture (G2a), and washing wherein sufficient thermal energy is introduced to the second suspended mixture (G2a) to provide a temperature in the range of from 65 to 95°C during the washing; then removing the second aqueous washing solution (W2) and optionally any material not floating on the surface of the second aqueous washing solution from the second suspended mixture (G2a) to obtain a second washed mixture (G2b). The removal step here corresponds to step h) of this embodiment of the process. Accordingly, after step g2), it is proceeded to step i), or to the optional step j), the optional step k) or the step l), if steps h) and i) are carried out concurrently.

The aqueous washing solutions (W1) and (W2) are as described herein above in the context of process steps 1a) to 1c). Generally, the steps g1) and g2) may be as described above for the process steps 1a) to 1c) and removal step 3).

The aqueous washing solution used in step g2) may be recycled to a preceding step, such as to step g1). This allows for an improved process economy, wherein only one aqueous washing solution needs to be provided for use in the entire process. Furthermore, the aqueous washing solution from step g2) may be used in the size reducing step e). It is important that the cleanest washing solution (i.e., with the lowest amount of foreign material present) is used in the last washing step, to ensure that the resultant washed mixture is as clean as possible.

Step h) involves removing the aqueous washing solution from the washed polymer recycling material stream (G) to obtain a washed polymer recycling material stream (H). Step h) may be as described above for the removal step 3).

Step i) involves removing the adsorbent material from the washed polymer recycling material stream (H) to obtain a washed polymer recycling material stream (I). Step i) may be as described above for the removal step 4).

The order of steps can be from h) to i), or steps h) and i) can be carried out concurrently.

Optional step j) involves drying the washed polymer recycling material stream (I) to obtain a dried polymer recycling material stream (J). Step j) may be as described above for the drying step 5).

Optional step(s) k) involve(s) conducting further recycling steps to obtain a further processed polymer recycling material stream (K).

For example, step k) may involve separating and sorting out the rigid polymer articles of the polymer recycling material stream. This may be reached by separating the polymer recycling material stream into a heavy fraction polymer material stream and a light fraction polymer recycling material stream.

Alternatively or additionally, step k) may involve an additional step, wherein any articles having a longest dimension of less than 2 mm (so-called fines) are removed. Any method known to the person skilled in the art may be employed, for example methods using screens or sieves.

Alternatively or additionally, step k) may involve further sorting the polymer recycling material stream by means of one or more optical sorters for one or more target polymers by removing any flakes containing material other than the one or more target polymers. This step may be carried out by one or more optical sorters as described above for step c).

Alternatively or additionally, step k) may involve removal of metal articles (e.g., flakes), preferably via magnetic forces. Removal of metal articles is advantageous to prevent the reactor equipment from damage by metal objects.

In some embodiments, the process comprises:

k1) separating the polymer recycling material stream (I) or (J) into a heavy fraction polymer material stream and a light fraction polymer recycling material stream (K); and/or

k2) further sorting the polymer recycling material stream (I), (J) or (K) by means of one or more optical sorters for one or more target polymers by removing any flakes containing material other than the one or more target polymers, yielding sorted polymer recycling material stream (K).

Alternatively or additionally, step k) may involve performing at least one sequence of steps, comprising dissolution in an organic solvent and precipitation and recovering the precipitate. Based on the organic solvent used, this sequence of step allows for the dissolution of particular polymers from the polymer recycling material stream and recovering of a purer polymer recycling material stream.

In some embodiments, the process comprises:

k3) performing at least one sequence of steps on the polymer recycling material stream (I) or (J), comprising k3a) dissolution in an organic solvent and k3b) precipitation and recovering the precipitate, to obtain a precipitated polymer recycling material stream (K).

The above-described further process steps k) can be combined in the process according to the present invention.

Step l) involves melt-extruding, preferably pelletizing, the polymer recycling material stream (I), (J) or (K), preferably wherein additives (Ad) are added in the melt state, to form an extruded, preferably pelletized, recycled polymer product (L). This step may be as described above for the extrusion step.

Optional step m) involves aerating the recycled polymer product (L) to remove volatile organic compounds, thereby generating an aerated extruded, preferably pelletized, recycled polymer product (M).

The order of steps l) and m) can be interchanged, such that the polymer recycling material stream (I), (J) or (K) is first aerated to form aerated polymer recycling material stream (M1), that is subsequently extruded, preferably wherein additives (Ad) are added in the melt state, to form an extruded, preferably pelletized and aerated recycled polymer product (L1).

The aeration of step m) may be achieved, inter alia, through the use of air, inert gases or steam. Preferably, the aeration of step m) is achieved by contacting the polymer recycling material stream (I), (J) or (K) or the recycled polymer product (L) with a gas being at least 60 % by volume $N_2$ gas.

The temperature at which the aeration according to step m) takes place may be selected according to the identity of the polymer(s) present in the polymer recycling material stream (I), (J) or (K) or the recycled polymer product (L). Suitable ranges for common polyolefins are as follows:

HDPE - preferably in the range of from 50 to 130 °C, more preferably from 90 to 122 °C, most preferably from 100 to 115 °C;

LDPE - preferably in the range of from 50 to 155 °C, more preferably from 75 to 105 °C;

Polypropylene - preferably in the range of from 50 to 155 °C, more from 100 to 150 °C.

It may also be beneficial to conduct the aeration according to step m) at reduced pressure, for example at less than 500 mbar abs., more preferably less than 200 mbar abs., most preferably less than 100 mbar abs.

The aeration according to step m) ensures that the content of volatile organic compounds is minimized in the aerated recycled polymer product (M) or (L1), avoiding any unpleasant odors that are typically associated with similar recycled polymer blends. These volatile organic compounds typically result from contamination of the polymer during the first consumer use, for example through contact with food, skin care products or other toiletries, or simply through decomposition of the polymer into volatile oligomeric chains during processing steps.

*Advantages of the process according to the present invention*

The process according to the present invention enables an efficient washing and deinking of polymer recycling material, wherein (re-)coloration of the polymer recycling material with the ink pigments/dyes is highly reduced or even avoided.

The adsorbent material used as an additive in the washing solution in the process efficiently prevents or at least minimizes recoloration of already deinked polymer material by (re-)adsorption of ink pigments and dyes, which are dissolved or dispersed in the washing medium due to "ink-bleeding".

In the art, adsorbent material is sometimes used for the purification of a washing solution to purify the washing solution after a washing step has been completed. In the present invention, the adsorbent material is not used for the mere removal of colorants/impurities from the washing solution but for preventing (re-)coloration of the polymer material during the washing step. Consequently, it is not only required to achieve a high removal efficiency but also to be able to remove the colorants immediately after dissolution/dispersion and before potential (re-)adsorption on the polymer surface. The process of the present invention reaches these targets as is shown in the experiment section, and recycled polymer products with low optical impurities can thus be obtained.

The process according to the present invention can be easily integrated in established polymer recycling processes, and already present equipment and set-up may be used.

When choosing a common adsorbent material, the costs required for the washing step can be held relatively low.

Thus, the present process is promising for the application in industrial recycling processes.

### *Products*

The present invention is further directed to the purified polymer recycling material, a recycled polymer product (L), (M), (L1) and (purified) polymer recycling material (M1) obtainable by the process according to any one of the above-described embodiments.

Preferably, the purified polymer recycling material and the recycled polymer product is a purified polyolefin and/or polyethylene terephthalate recycling material or recycled product, respectively. More preferably, the purified polymer recycling material and the recycled polymer product is a purified polyolefin (even more preferably a polypropylene) recycling material or recycled product, respectively.

The purified polymer recycling material or the recycled polymer product is characterized by high purity, in particular optical purity, and it may be used in different applications, such as packaging applications. The purified polymer recycling material and/or the recycled polymer product is preferably characterized by the following values in the CIELAB color space (L*a*b*), determined according to ISO 11664-4:

i) $\Delta a^*b^*$ of less than 15.0, preferably less than 10.0, more preferably less than 8.0, calculated by

$$\Delta a^*b^* = ((a^*_s - a^*_{ref})^2 + (b^*_s - b^*_{ref})^2)^{1/2},$$

and/or

ii) $\Delta L^*$ of less than 13.0, preferably less than 12.5, calculated by

$$\Delta L^* = L^*_{ref} - L^*_s,$$

and/or

iii) $\Delta E$ of less than 18.0, preferably less than 15.0, more preferably less than 12.5, calculated by

$$\Delta E = ((L^*_s - L^*_{ref})^2 + (a^*_s - a^*_{ref})^2 + (b^*_s - b^*_{ref})^2)^{1/2},$$

wherein in any of the equations s denotes the parameter of a sample of the purified polymer recycling material and ref denotes the parameter of a non-printed area of a sample of the polymer recycling material stream (1).

The $\Delta a^*b^*$ value may be in the range of from 0 to less than 15.0. The $\Delta L^*$ value may be in the range of from 0 to less than 13.0. The $\Delta E$ value may be in the range of from 0 to less than 18.0. Preferably, the purified polymer recycling material and/or the recycled polymer product is characterized by all parameters i) to iii).

For determination of the L*, a* and b* values, a spectrometer (e.g., DataColor 200 photo spectrometer) is generally used in accordance with ISO 11664-4, and reflection is measured over a wavelength range of 400 to 700 nm on polymer flakes. Suitable is the selection of large area view and illumination of flake area with a diameter of at least 22 mm. In case of transparent flakes, a white background is generally used during measurement. Generally, an average from at least 5 measurements (usually on different article flakes) is considered for one value; for less homogeneous article feedstocks, more measurements may be required in order to determine a reliable average value as will be appreciated by a skilled person. Although the measurements are performed on flaked material for the sample s (i.e., of the purified polymer recycling material), the color values for the extruded polymer products (i.e., the recycled polymer product) do not change significantly.

The measurements used for obtaining the L*, a* and b* values for the sample and the reference may vary depending on the feedstock and the homogeneity of the flexible polymer recycling material. Generally, in case rigid article flakes or other materials are contained in the polymer recycling material stream and/or in the purified polymer recycling material, only the flakes of the flexible polymer recycling articles are considered.

In embodiments, where the feedstock of flexible polymer recycling articles is homogeneous at least in view of the base color of the article body, the reference sample ("ref') values are measured on the non-printed areas (e.g., non-printed backside or frontside of the article flakes; areas of the article flakes where no ink is present) before washing the article flakes. For determination of the sample values after washing ("s"), both sides of the article flakes are measured. An average value from at least 5 measurements is used for the s and ref samples.

In embodiments of a less homogeneous article feedstock, i.e., a feedstock wherein the base colors of the article bodies are different (e.g., some flakes are white, other flakes are light blue, etc.), separating a sample of the feedstock before washing and of a sample after washing into different fractions may be required to measure different L*, a* and b* values for each kind of article flakes. The measurements are then carried out as described for the homogeneous article feedstock. As final values, an average of the obtained respective $\Delta$ values is used (e.g., an average of 3 $\Delta L^*$ values, each $\Delta L^*$ value belonging to one fraction).

Further, in embodiments of a strongly inhomogeneous article feedstock, where separation of flexible polymer recycling articles is not possible or at least not efficient, measurements may be carried out on randomly picked flexible article flakes. For these measurements, a higher number of flakes should be considered (e.g., 20 flakes or more, such as 100 flakes) to form the average for the reference and the sample.

Alternatively or additionally, the purified polymer recycling material and/or the recycled polymer product may be characterized by the following values in the CIELAB color space (L*a*b*), determined according to ISO 11664-4 (as described above):

iv) $\Delta'a^*b^*$ of at least 1.0, preferably at least 3.0, more preferably a least 8.0, calculated by

$$\Delta'a^*b^* = ((a^*_s - a^*_{ref1})^2 + (b^*_s - b^*_{ref1})^2)^{1/2},$$

and/or

v) $\Delta'L^*$ of less than 0.0, preferably less than -1.0, calculated by

$$\Delta'L^* = L^*_{ref1} - L^*_s,$$

and/or

vi) $\Delta E$ of at least 2.3, preferably at least 5.0, more preferably a least 10.0, calculated by

$$\Delta'E = ((L^*_s - L^*_{ref1})^2 + (a^*_s - a^*_{ref1})^2 + (b^*_s - b^*_{ref1})^2)^{1/2},$$

wherein in any of the equations s denotes the parameter of a sample of the purified polymer recycling material and ref1 denotes the parameter of a sample of a purified polymer recycling material obtained from the same polymer recycling material stream (1), however washed in the absence of any adsorbent material at the otherwise same conditions.

The $\Delta a^*b^*$ value may be in the range of from 1.0 to 20.0. The $\Delta L^*$ value may be in the range of from -15.0 to less than 0. The $\Delta E$ value may be in the range of from 2.3 to 25.0. Preferably, the purified polymer recycling material and/or the recycled polymer product is characterized by all parameters iv) to vi).

In some embodiments, the purified polymer recycling material and/or the recycled polymer product is characterized by a $\Delta'a^*b^*$ of at least 1.0, preferably at least 3.0, more preferably a least 8.0, and a negative $\Delta'L^*$ value.

In some embodiments, the purified polymer recycling material and/or the recycled polymer product is characterized by a $\Delta'E$ of at least 2.3, preferably at least 5.0, more preferably a least 10.0, and a negative $\Delta'L^*$ value.

In some embodiments, the purified polymer recycling material and/or the recycled polymer product may be further characterized by the following values in the CIELAB color space (L*a*b*), determined according to ISO 11664-4 (as described above):

vii) L* of more than 74.5, more preferably more than 80.0; and/or
viii) a* of from -10.0 to 10.0, preferably -7.0 to 7.0; and/or
ix) b* of from -10.0 to 10.0, preferably -7.0 to 7.0.

In some embodiments, the purified polymer recycling material and/or the recycled polymer product is characterized by all of parameters vii) to ix).

## *Use*

The present invention is further directed to the use of an adsorbent material in the washing of a polymer recycling material for preventing recoloration of the polymer recycling material with ink removed from the surface of the polymer recycling material. The adsorbent material may be as defined herein above for the process of the invention.

The polymer recycling material may also be as defined above. Generally, an adsorbent material may be used in the washing of any polymer recycling material comprising surface ink. Preferably, the polymer recycling material comprises at least 10 wt.-% of flexible polymer recycling articles, as defined herein above. In some embodiment, the polymer recycling material comprises a high content (e.g., 70 wt.-% or more) of flexible polymer recycling articles.

## Figures

The present invention is further illustrated by the following figures, showing:

Figure 1: results obtained for Inventive Example 1: washing packaging bag flakes in the presence of a zeolite as adsorbent material, with A: frontside of flakes; B: backside of flakes and C: pellets, all after washing;

Figure 2: results obtained for Inventive Example 2: washing packaging bag flakes in the presence of activated carbon as adsorbent material, with A: frontside of flakes and B: backside of flakes, both after washing;

Figure 3: results obtained for Inventive Example 3: washing packaging bag flakes in the presence of color collection clothes as adsorbent material, with A/B: frontside and backside of flakes and C: pellets, all after washing;

Figure 4: results obtained for Comparative Example 1: washing of packaging bag flakes in the absence of adsorbent material, with A: flakes after washing; B: flakes and pellets after washing and C: washing solution after washing;

Figure 5: packaging bag flakes before washing, with A: printed frontside before shredding and B: flakes after shredding;

Figure 6: results obtained for Comparative Example 2: washing the flakes obtained in Comparative Example 1 in the absence of adsorbent material, with A: flakes before washing; and B: flakes after washing;

Figure 7: results obtained for Comparative Example 3: washing the flakes obtained in Comparative Example 1 in the presence of color collection clothes as adsorbent material, with A: flakes before washing; and B: flakes after washing.

**Examples**

Three purification examples according to the present invention (Inventive Examples 1 to 3) were performed on a flexible polypropylene material feedstock obtained from the outer mantle layer of Borealis' packaging bags with a blue Borealis logo printed on their surface. To obtain the outer layer, bag handles and bottom and the inner layer of the mantle were removed. The bags can be obtained from Borealis. The feedstock was shredded to obtain flakes of a size of about 30 mm x 30 mm and used in the form of flakes for all examples. The difference between the three examples was the kind of adsorbent material used.

The flexible polyolefin material feedstock flakes were placed in a 750 ml glass beaker equipped with an overhead stirrer and electrical heating in the presence of an adsorbent material as indicated below. Pellets of virgin polypropylene material were used as rigid articles to facilitate washing.

The washing composition of each of the Inventive Examples was prepared as follows:
9 g (about 3 wt.-%, weight ratio polymer: adsorbent = 0.18:1) of the respective adsorbent, 1.6 g (about 0.5 wt.-%) of packaging bag flakes with a blue surface print, and 8 g of virgin PP pellets (weight ratio flexible : rigid = 0.2:1) were added to an aqueous solution obtained by dissolving 6 g (about 2 wt.-%) of NaOH and 0.6 g of detergent (Tubiwash GFN, about 0.2 wt.-%, weight ratio detergent: NaOH = 0.1:1) in 300 ml of water.

The mixture was washed at 80 °C for 60 min and at 150 rpm using an overhead stirrer.

After washing, the flakes were rinsed with cold water and dried at 70°C for 1 hour in a vacuum oven, followed by drying over night at room temperature.

Comparative Examples 1 to 3 were also prepared. Comparative Example 1 was prepared similar to the Inventive Examples, however without using any adsorbent material. In Comparative Examples 2 and 3, the recolored polymer of Comparative Example 1 was washed in the presence or absence of an adsorbent material, respectively.

The obtained results are shown in Figures and Table 1 and are further described in the following.

Inventive Example 1:

In this example, a zeolite (Clariant Tonsil APT-N) was used as adsorbent material.

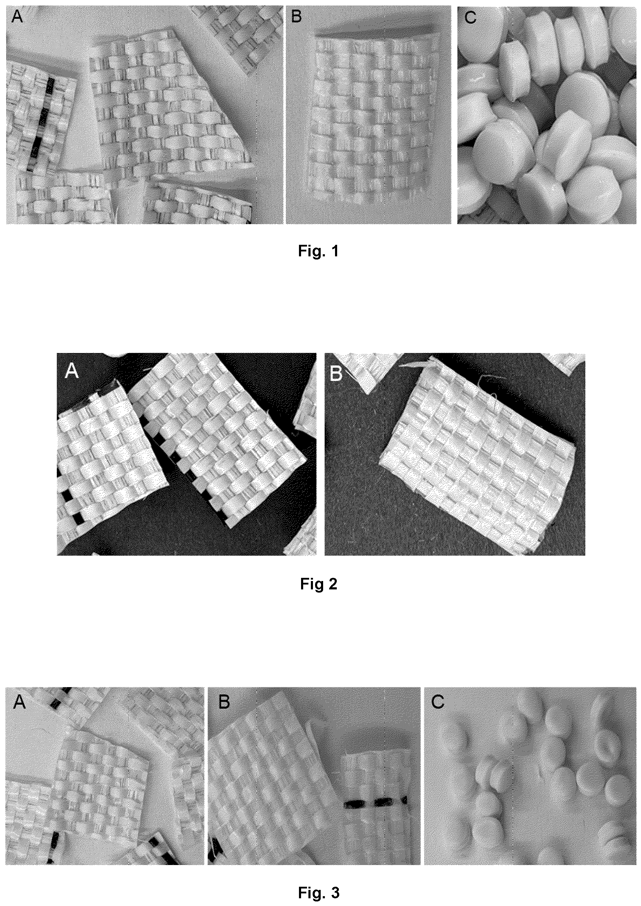

As depicted in Figure 1, a high deinking degree with only a small amount of blue print remaining on the printed side ("frontside") of the packaging bag flakes was reached (A). No significant recoloration due to ink-bleeding occurred on any side of the packaging bag flakes (A and B) or on the virgin PP pellets (C).

Inventive Example 2:

In this example, activated carbon (CarboTech DFG 8x30 GL) was used as adsorbent material.

As depicted in Figure 2, a high deinking degree with only a small amount of blue print remaining on the printed side ("frontside") of the packaging bag flakes was reached (A). No significant recoloration due to ink-bleeding occurred on any side of the packaging bag flakes (A and B).

Inventive Example 3:

In this example, color collection clothes (Dr. Beckmann Farb & Schmutz Fänger All in 1) were used as adsorbent material.

As depicted in Figure 3, a high deinking degree with only a small amount of blue print remaining on the printed side ("frontside") of the packaging bag flakes was reached (A). No recoloration due to ink-bleeding occurred on any side of the packaging bag flakes (A and B) or on the virgin PP pellets (C).

Comparative Example 1:

This example was carried out under the similar condition as the inventive examples, but with no adsorbent material being present.

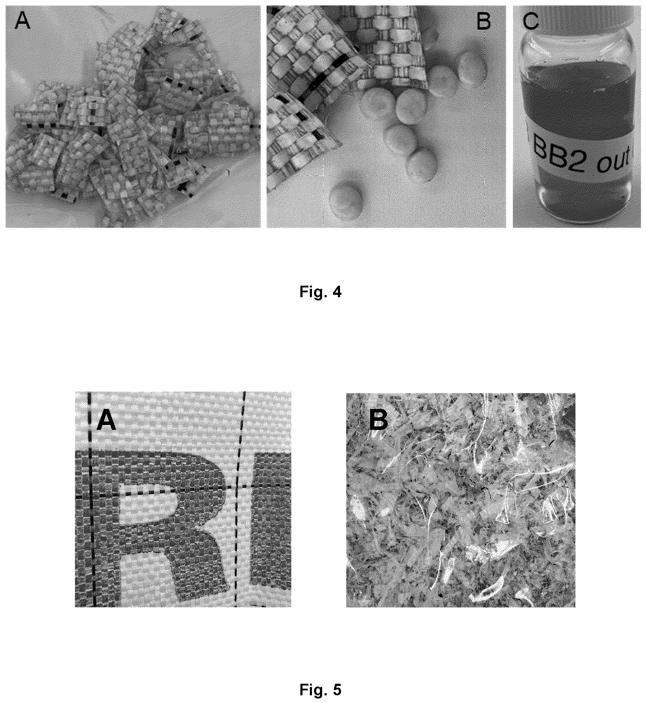

As depicted in Figure 4, a high deinking degree but strong blue recoloration on both sides of the packaging bag flakes and on virgin PP pellets due to ink-bleeding was found (A and B). The high degree of ink-bleeding can also be seen in the strong coloration of the washing solution (C).

For a better assessment of the deinking degree, Figure 5 depicts respective packaging bag parts before washing and shredding, wherein a white, non-printed, and a blue printed area are shown (A) and bag flakes after shredding (B). The black stripes are fully colored polymeric fibers which cannot be removed by the de-inking process.

Comparative Example 2:

In order to test if the recoloration caused by ink-bleeding can be removed from the flakes obtained in Comparative Example 1, these flakes were washed for 30 min at 80°C with the same aqueous solution as in the other examples - without adsorbent material but with virgin PP pellets.

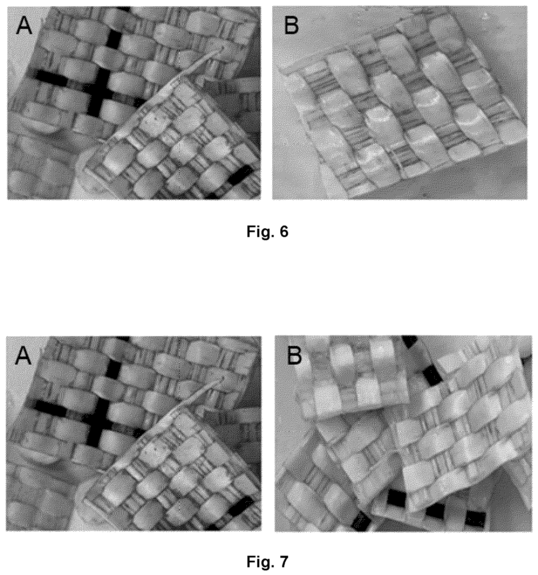

As depicted in Figure 6, no significant color change occurred (A: before washing versus B: after washing), confirming that additional alkaline washing was not sufficient to remove the blue color resulting from ink-bleeding.

Comparative Example 3:

This example was carried out under the similar conditions as Comparative Example 2 on the flakes obtained in Comparative Example 1, however in the presence of the color collection clothes as adsorbent material.

As depicted in Figure 7, only a slight color change on the recolored flakes occurred (A: before washing versus B: after washing), confirming that additional alkaline wash is not sufficient to remove the blue color resulting from ink-bleeding.

Measurements of the CIELAB values

In addition to evaluating the visual appearance (color) of the samples as described above, the CIELAB color values L*, a* and b* for both, the frontside of packaging bag flakes (i.e., the area with the blue print on its surface and non-printed area) and the backside of the same flakes (i.e., the area without print), were measured with a DataColor 200 photo spectrometer according to ISO 11664-4. These measurements were conducted on flakes of 30 mm x 30 mm in size according to the spectrometer manual and selecting a large area view and illuminating flake area with a diameter of at least 22 mm, and reflection was measured over a wavelength range of 400 to 700 nm. Generally, an average from at least 5 measurements (usually on different flakes) was considered for one value (i.e., of the "average" values).

For the determination of the ink removal efficiency and the recoloration degree due to redeposition of dissolved ink pigments/dyes, the CIELAB color values L*, a* and b* were used. For quantifying the CIELAB color difference $\Delta a^*b^*$ and $\Delta E$, and lightness difference $\Delta L^*$ of a sample compared to the reference sample, the following equations were used:

$$\Delta a^*b^* = ((a^*_s - a^*_{ref})^2 + (b^*_s - b^*_{ref})^2)^{1/2},$$

$$\Delta L^* = L^*_{ref} - L^*_s,$$

and

$$\Delta E = ((L^*_s - L^*_{ref})^2 + (a^*_s - a^*_{ref})^2 + (b^*_s - b^*_{ref})^2)^{1/2},$$

with

$a^*_s$: CIELAB parameter a* of the sample
$a^*_{ref}$: CIELAB parameter a* of the reference
$b^*_s$: CIELAB parameter b* of the sample
$b^*_{ref}$: CIELAB parameter b* of the reference
$L^*_s$: CIELAB parameter L* of the sample
$L^*_{ref}$: CIELAB parameter L* of the reference.

As the reference values $L^*_{ref}$, $a^*_{ref}$ and $b^*_{ref}$ for the CIELAB $\Delta a^*b^*$, $\Delta E$ and $\Delta L^*$ calculation, the L*, a* and b* values of the area without print of a packaging bag sample before washing was used. This was either the non-printed backside of the flakes, the non-printed area of the frontside of the flakes or an average of both, as depicted in Table 1. The sample values $L^*_s$, $a^*_s$ and $b^*_s$ were determined for the backside and frontside of the flakes, and their average was made. Due to the presence of the black stripes in the flakes, the flake side could be easily determined. The respective backside/-frontside/average values of the reference and sample were combined to obtain the $\Delta$ values, wherein each value is an average of 4 measurements, i.e., the "average" of the reference "ref" and of the examples is an average of 8 measurements. The obtained results are summarized in Table 1 below.

**Table 1:**

| Experiment | Flake side | L* | a* | b* | Δa*b* | ΔL* | ΔE |
|---|---|---|---|---|---|---|---|
| Reference, white area without print before washing ("ref") | front | 86.8 | -0.7 | 0.8 | 0.0 | 0.0 | 0.0 |
| | back | 87.0 | -0.7 | 0.8 | 0.0 | 0.0 | 0.0 |
| | average | 86.9 | -0.7 | 0.8 | 0.0 | 0.0 | 0.0 |
| Reference, blue area before washing | front | 54.4 | -21.2 | -29.9 | 36.9 | 32.4 | 36.9 |
| Comparative Example 1 | front | 72.5 | -11.3 | -12.5 | 17.0 | 14.3 | 22.3 |
| | back | 74.1 | -10.9 | -11.4 | 15.9 | 12.9 | 20.4 |
| | average | 73.3 | -11.1 | -11.9 | 16.5 | 13.6 | 21.3 |
| Inventive Example 1 | front | 80.0 | -5.8 | -4.9 | 7.6 | 6.8 | 10.3 |
| | back | 82.9 | -3.5 | -2.4 | 4.3 | 4.1 | 5.9 |
| | average | 81.5 | -4.6 | -3.6 | 6.0 | 5.5 | 8.0 |
| Inventive Example 2 | front | 75.8 | -2.3 | -1.0 | 2.4 | 11.0 | 11.4 |
| | back | 74.9 | -1.8 | -0.2 | 1.5 | 12.1 | 12.1 |
| | average | 75.4 | -2.1 | -0.6 | 2.0 | 11.6 | 11.7 |
| Inventive Example 3 | front | 83.1 | -4.5 | -3.4 | 5.6 | 3.7 | 6.9 |
| | back | 84.3 | -3.7 | -2.3 | 4.3 | 2.7 | 5.0 |
| | average | 83.7 | -4.1 | -2.9 | 5.0 | 3.2 | 6.0 |

As can be clearly seen in Table 1, the Δa*b*, ΔE and ΔL* values are significantly lower for all inventive examples compared to Comparative Example 1. This indicates that the flakes are much less (re)colored and confirms the visual evaluation described above.

In a further calculation, the differences $\Delta'a*b*$, $\Delta'E$ and $\Delta'L*$ were determined, wherein the average values obtained for Comparative Example 1 (i.e., the sample washed in the absence of any adsorbent material) were used as the reference "ref1" and the following equations were used:

$$\Delta'a*b* = ((a*_s-a*_{ref1})^2 + (b*_s-b*_{ref1})^2)^{1/2},$$

$$\Delta'L* = L*_{ref1}-L*_s,$$

and

$$\Delta'E = ((L*_s-L*_{ref1})^2 + (a*_s-a*_{ref1})^2 + (b*_s-b*_{ref1})^2)^{1/2}).$$

Table 2 depicts the results.

**Table 2:**

| Experiment | Flake side | L* | a* | b* | Δ'a*b* | Δ'L* | Δ'E |
|---|---|---|---|---|---|---|---|
| Comparative Example 1 ("ref1") | average | 73.3 | -11.1 | -11.9 | 0.0 | 0.0 | 0.0 |
| Inventive Example 1 | average | 81.5 | -4.6 | -3.6 | 10.5 | -8.2 | 13.4 |
| Inventive Example 2 | average | 75.4 | -2.1 | -0.6 | 14.4 | -2.1 | 14.6 |
| Inventive Example 3 | average | 83.7 | -4.1 | -2.9 | 11.4 | -10.4 | 15.4 |

Table 2 shows the significant changes in CIELAB values as comparison between samples washed in the presence and absence of an adsorbent material.

**Claims**

1.  A process for purifying polymer recycling material, the process comprising the steps of:

    1) providing a polymer recycling material stream (1) that contains at least 10 wt.-% of flexible polymer recycling articles, based on the total weight of the polymer recycling material stream (1);
    2) washing the polymer recycling material stream (1) in a washing solution in the presence of an adsorbent material at a temperature in the range of from 20 to 95 °C to obtain a washed polymer recycling material stream (2);
    3) removing the washing solution from the washed polymer recycling material stream (2) to obtain a washed polymer recycling material stream (3);
    4) removing the adsorbent material from the washed polymer recycling material stream (3) to obtain a washed polymer recycling material stream (4),
    wherein steps 3) and 4) can be carried out concurrently;
    5) optionally drying the washed polymer recycling material stream (4) to obtain a dried polymer recycling material stream (5);
    and thus obtaining a purified polymer recycling material.

2.  The process according to claim 1, wherein the adsorbent material is an adsorbent or an adsorbent mixture comprising at least one inorganic or organic adsorbent, preferably selected from the group consisting of zeolites, activated carbon, charcoal, silica, alumina, clay, cellulose-based material, cotton-based material, polyglucosamines, such as chitosan and chitin, metal oxides and metal hydroxides, and any combination thereof.

3.  The process according to any one of the preceding claims, wherein the washing solution comprises water, one or more organic solvent(s) or a mixture of water and one or more organic solvent(s), preferably water.

4.  The process according to any one of the preceding claims, wherein the washing step 2) comprises rinsing the washed polymer recycling material stream (4) with water, one or more organic solvent(s) or a mixture of water and one or more organic solvent(s), preferably with water.

5.  The process according to any one of the preceding claims, wherein the washing step 2) is carried out at a temperature in the range of from 50 to 90 °C, preferably from 65 to 85 °C.

6.  The process according to any one of the preceding claims, wherein the washing step 2) is carried out for a washing time in the range of from 5 to 120 min, preferably from 10 to 80 min, more preferably from 15 to 60 min.

7.  The process according to any one of the preceding claims, wherein the washing step 2) is carried out in the presence of rigid polymer articles, preferably being in the form of flakes or pellets.

8.  The process according to any one of the preceding claims, wherein the flexible polymer recycling articles in the polymer recycling material stream (1) are in the form of flakes.

9.  The process according to any one of the preceding claims, wherein the washing solution is an alkaline aqueous washing solution having a pH in the range of from 8.0 to 14.0, preferably from 10.0 to 14.0 and more preferably from 12.0 to 14.0, and optionally comprises a detergent.

10. The process according to any one of the preceding claims, wherein the flexible polymer recycling articles comprise a polyolefin and/or polyethylene terephthalate polymer, preferably a polyolefin polymer.

11. The process according to any one of the preceding claims, wherein the removal step 4) is conducted with a float/sink unit or with a hydrocyclone.

12. The process according to any one of the preceding claims, wherein the purified polymer recycling material has the following values in the CIELAB color space (L*a*b*), determined according to ISO 11664-4, as described in the specification:

i) $\Delta a*b*$ of less than 15.0, preferably less than 10.0, calculated by

$$\Delta a*b* = ((a*_s-a*_{ref})^2 + (b*_s-b*_{ref})^2)^{1/2},$$

and/or

ii) $\Delta L*$ of less than 13.0, preferably less than 12.5, calculated by

$$\Delta L* = L*_{ref} - L*_s,$$

and/or

iii) $\Delta E$ of less than 18.0, preferably less than 15.0, calculated by

$$\Delta E = ((L*_s-L*_{ref})^2 + (a*_s-a*_{ref})^2 + (b*_s-b*_{ref})^2)^{1/2}),$$

wherein in any of the equations s denotes the parameter of a sample of the purified polymer recycling material and ref denotes the parameter of a non-printed area of a sample of the polymer recycling material stream (1).

13. The process according to any one of the preceding claims, comprising the following steps:

a) providing a polymer recycling material stream (A) that contains at least 10 wt.-% of flexible polymer recycling articles, based on the total weight of the polymer recycling material stream (A);

b) optionally sieving the polymer recycling material stream (A) to create a sieved polymer recycling material stream (B) having only articles with a longest dimension in the range of from 30 to 400 mm;

c) optionally sorting the polymer recycling material stream (A) or (B) by means of one or more optical sorters at least by polymer type, thereby generating a sorted polymer recycling material stream (C);

d) optionally adding rigid polymer articles to the polymer recycling material stream (A), (B) or (C) to form a polymer recycling material stream (D);

e) reducing the size of the polymer recycling material stream (A), (B), (C) or (D) to form a flaked polymer recycling material stream (E);

f) optionally adding rigid polymer articles to the flaked polymer recycling material stream (E) to form a polymer recycling material stream (F);

g) washing the polymer recycling material stream (E) or (F) in a washing solution in the presence of an adsorbent material at a temperature in the range of from 20 to 95 °C to obtain a washed polymer recycling material stream (G);

h) removing the washing solution from the washed polymer recycling material stream (G) to obtain a washed polymer recycling material stream (H);

i) removing the adsorbent material from the washed polymer recycling material stream (H) to obtain a washed polymer recycling material stream (I),

wherein steps h) and i) can be carried out concurrently;

j) optionally drying the washed polymer recycling material stream (I) to obtain a dried polymer recycling material stream (J);

k) optionally conducting further recycling steps to obtain a further processed polymer recycling stream (K);

l) melt-extruding, preferably pelletizing, the polymer recycling material stream (I), (J) or (K), preferably wherein additives (Ad) are added in the melt state, to form an extruded, preferably pelletized, recycled polymer product (L); and

m) optionally aerating the recycled polymer product (L) to remove volatile organic compounds, thereby generating an aerated extruded, preferably pelletized, recycled polymer product (M),

wherein the order of steps l) and m) can be interchanged, such that the polymer recycling material stream (I), (J) or (K) is first aerated to form aerated polymer recycling material stream (M 1), that is subsequently extruded, preferably wherein additives (Ad) are added in the melt state, to form an extruded, preferably pelletized and aerated recycled polymer product (L1).

14. A purified polymer recycling material or a recycled polymer product (L), (M), (L1) or (M1) obtainable by the process according to any one of the preceding claims.

15. Use of an adsorbent material in the washing of a polymer recycling material for preventing recoloration of the polymer recycling material with ink removed from the surface of the polymer recycling material.

**Fig. 1**

**Fig 2**

**Fig. 3**

Fig. 4

Fig. 5

Fig. 6

Fig. 7

Europäisches
Patentamt

European
Patent Office

Office européen
des brevets

# EUROPEAN SEARCH REPORT

**Application Number**

EP 24 19 0354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU R H ET AL: "Highly efficient PET film-assisted adsorption process for the de-inking of xerographic wastepaper", JOURNAL OF THE TAIWAN INSTITUTE OF CHEMICAL ENGINEERS, ELSEVIER, AMSTERDAM, NL, vol. 41, no. 3, 1 May 2010 (2010-05-01), pages 344-351, XP027036374, ISSN: 1876-1070 [retrieved on 2010-04-07] * Title, abstract, section 1, section 2.4; figures 10, 11; table 4 * | 1,3-8, 11,12, 14,15 | INV. C08J11/08 B29B17/02 C09D9/00 |
| X | GB 1 273 678 A (JAPAN MAIZE PRODUCTS COMPANY L [JP]) 10 May 1972 (1972-05-10) * Title, abstract; page 1, left, lines 11-29; page 2, right, lines 84-90; claim 1; examples 1, 10 * | 1,3-8, 11,12, 14,15 | |
| X | CN 106 346 634 A (ZHEJIANG EXPO NEW MAT CO LTD) 25 January 2017 (2017-01-25) * Title, abstract; claims 1, 2, 4; examples 1-4 * | 1,2,4,5, 9-15 | TECHNICAL FIELDS SEARCHED (IPC) C08J B29B C09G C09D |
| A | MARYAN ALI SADEGHIAN ET AL: "Discoloration of denim garment with color free effluent using montmorillonite based nano clay and enzymes: nano bio-treatment on denim garment", JOURNAL OF CLEANER PRODUCTION, ELSEVIER, AMSTERDAM, NL, vol. 91, 19 December 2014 (2014-12-19), pages 208-215, XP029221167, ISSN: 0959-6526, DOI: 10.1016/J.JCLEPRO.2014.12.014 * Title, abstract, sections 2.1 and 2.2; table 1 * | 1,12 | |

-/--

The present search report has been drawn up for all claims

| Place of search | Date of completion of the search | Examiner |
|---|---|---|
| The Hague | 11 March 2025 | Mooibroek, Tiddo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

**Application Number**

**EP 24 19 0354**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/168677 A1 (HONG KONG RES INST TEXTILES & APPAREL LTD [CN]) 27 August 2020 (2020-08-27) * Title, abstract; paragraph [0001]; claims 1, 3, 4, 6; figure 1; example 1 * ----- | 1,2,4,5, 9-12,14, 15 | |
| | | | **TECHNICAL FIELDS SEARCHED (IPC)** |

The present search report has been drawn up for all claims

| Place of search | Date of completion of the search | Examiner |
|---|---|---|
| The Hague | 11 March 2025 | Mooibroek, Tiddo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0354

11-03-2025

| Patent document cited in search report | | Publication date | Patent family member(s) | | Publication date |
|---|---|---|---|---|---|
| GB 1273678 | A | 10-05-1972 | GB | 1273678 A | 10-05-1972 |
| | | | US | 3764460 A | 09-10-1973 |
| CN 106346634 | A | 25-01-2017 | NONE | | |
| WO 2020168677 | A1 | 27-08-2020 | CN | 111607920 A | 01-09-2020 |
| | | | EP | 3699355 A1 | 26-08-2020 |
| | | | US | 2020270807 A1 | 27-08-2020 |
| | | | WO | 2020168677 A1 | 27-08-2020 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023118421 A1

- WO 2023180222 A1

**Non-patent literature cited in the description**

- **JAMES SANGSTER**. Octanol-Water Partition Coefficients of simple organic compounds. *J. Phys. Chem. Ref. Data*, 1989, vol. 18 (3), 1111-1226

- **M. T. YAGUB et al.** Dye and its removal from aqueous solution by adsorption: A review. *Advances in Colloid and Interface Science*, 2014, vol. 209, 172-184
- **HANS ZWEIFEL**. Plastic Additives Handbook. 2001, 871-873